# FASCICULE DE BREVET EUROPEEN

(11) **EP 3 671 371 B1**
(45) Date de publication et mention de la délivrance du brevet: **26.10.2022**
(21) Numéro de dépôt: 19217546.1
(22) Date de dépôt: 18.12.2019
(51) Int. Cl.: G06K 19/07, G04G 21/04, G06K 19/077

(54) **DISPOSITIF DE COMMUNICATION COMPRENANT UNE MONTRE MUNIE D'UNE PUCE RADIOFRÉQUENCE**
KOMMUNIKATIONSVORRICHTUNG, DIE EINE ARMBANDUHR MIT EINEM FUNKFREQUENZ-CHIP UMFASST
COMMUNICATION DEVICE COMPRISING A WATCH PROVIDED WITH AN RFID CHIP

(30) Priorité: 20.12.2018 CH 15752018
(43) Date de publication de la demande: 24.06.2020
(73) Titulaire: Boninchi S.A., 1219 Châtelaine/Genève (CH)
(72) Inventeur: SAULE, Christian, 1782 Belfaux (CH); BOYER, Louis, 74100 Ville-la-Grand (FR); GRENET, Eric, 2000 Neuchâtel (CH); HENNEMANN, Cédric, 1337 Vallorbe (CH); VOROBYOV, Oleksandr, 2034 Peseux (CH)
(74) Mandataire: Bugnion Genève

(56) Documents cités:
- WO-A1-2013/041698
- WO-A1-2017/016872
- US-A1- 2016 364 704

## Description

### DOMAINE TECHNIQUE DE L'INVENTION

La présente invention concerne un dispositif de communication utilisant une montre munie d'une puce radiofréquence.

### ÉTAT DE LA TECHNIQUE ANTERIEURE

Les systèmes de communication utilisant une montre existent pour la plupart afin d'authentifier la montre ou proposer une solution de localisation en cas de vol ou de perte de l'objet.

Par exemple la demande de brevet WO2017016872 concerne une montre avec stockage de données et capacité d'échange de données sans fil et une méthode d'identification d'une telle montre. Dans ce cas, la montre comprend un caisson, une plaque de fond, une puce RFID qui est contenue dans un bloc en matière plastique dont le fond comprend une couche de matière magnétique. Le problème résolu par cette solution est d'isoler la puce des parties métalliques de la montre de façon à éviter les interférences et améliorer l'émission.

Le brevet EP1660953B concerne une montre à boitier métallique comprenant un module électronique pour la mémorisation d'informations qui est logé au moins en majeure partie dans une cavité ouverte vers l'extérieur de façon à atténuer les perturbations dues au boitier métallique de la montre lors d'une communication avec un appareil de lecture et/ou d'écriture d'information.

La demande de brevet EP2495621A1 concerne une montre-bracelet comprenant une puce radiofréquence avec antennes à structure de résonateur à anneau partagé (SRR) et/ ou antenne méta-matériaux fonctionnant sur les bandes de fréquence UHF et/ou microonde. L'avantage est d'assurer une directivité d'antennes de la puce radiofréquence orientée vers l'extérieur de la montre.

Toutes ces solutions visent donc essentiellement à améliorer les conditions d'émission entre l'antenne et le récepteur.

Il existe toutefois un besoin de proposer une solution qui apporte un réel avantage d'utilisation d'une montre connectée.

### EXPOSÉ DE L'INVENTION

Ainsi, l'invention concerne un dispositif de communication à distance entre une montre et un terminal de communication d'un utilisateur, comprenant une montre munie d'un module de communication sans fil comprenant une puce RFID, de préférence passive, et une antenne de communication associée à ladite puce RFID, caractérisé en ce que le module de communication est logé dans une couronne ou un poussoir mécanique de ladite montre et en ce que le module comprend des moyens d'activation de la communication configurés pour mettre en relation le module de communication avec un récepteur RFID ; lesdits moyens d'activation étant mis en oeuvre par contact humain sur une surface desdits moyens d'activation et en ce qu'en réponse à la mise en oeuvre des moyens d'activation, le module de communication est configuré pour transmettre au récepteur RFID un signal, lequel génère la transmission par le second module de communication d'au moins une information sous forme d'un ordre ou d'une commande au terminal de communication.

Ainsi, l'invention a pour but de proposer un dispositif utilisant une montre du type mécanique dont les fonctions mécaniques de sa couronne ou de son poussoir sont maintenues et opérationnelles mais dont la même couronne ou poussoir peut être utilisée sélectivement par son utilisateur comme une commande déportée permettant d'enclencher automatiquement une action, une commande ou encore une authentification sur un terminal de communication d'un utilisateur.

Le terminal de l'utilisateur peut être n'importe quel ordinateur ou terminal de commande électronique comme : un téléphone portable, une tablette électronique, un ordinateur portable ou fixe, une installation domotique, une clé électronique d'un véhicule, une alarme, etc.

L'ordre ou l'information communiquée peut être de nature à identifier l'origine de la communication et à initier automatiquement une action ou une commande sur le terminal de communication. De plus, la mémoire peut contenir des données additionnelles relatives à la configuration du terminal de communication. De telles informations peuvent être des paramètres de réglage du terminal de commande ou d'un appareil sous contrôle du terminal. Des informations peuvent aussi être des informations relative à la fabrication, l'authentification, la maintenance, le traçage de la montre ou d'un autre appareil sous contrôle du terminal de commande.

En particulier, La puce RFID peut comprendre une mémoire contenant au moins un identifiant lequel est communiqué au second module de communication qui transmet au terminal de communication une information pour valider ou initier un ordre ou une commande programmé dans ledit terminal de communication. En particulier, l'information transmise au terminal peut être l'identifiant en tant que tel ou toute information dérivée de cet identifiant comme une information d'authentification ou autres.

L'action engendrée par l'ordre ou la commande peut être de nature physique, comme par exemple, une action d'ouverture automatique d'une porte, le démarrage d'un véhicule, la commande de mise en route ou d'arrêt d'un appareil domotique, etc.

Selon un exemple possible, le second module de communication peut être un dispositif électronique d'identification telle qu'une clé USB ou NFC fonctionnant selon un protocole d'identification de type U2F, configuré pour communiquer un signal identification sécurisé au terminal de communication (ordinateur, téléphone, etc.,) lors d'une connexion à un service internet. Dans ce cas, le dispositif d'identification comprend le récepteur RFID pour recevoir le signal du module de communication de la couronne ou du poussoir ; lequel signal est transmis sous forme d'un signal d'authentification par le second module de communication vers le terminal de communication.

L'ordre ou la commande peut être réceptionné par un programme du terminal, comme une application (App) d'un terminal de communication mobile, de façon à initier une action ou une réponse liée à la nature du programme ou de l'application. Selon les programmes, la mise en oeuvre de la commande peut formuler une intention de l'utilisateur et peut être transformée sous la forme d'une action simple par le terminal, comme par exemple le déclenchement d'un outil média comme une caméra du terminal, une authentification sans login, ou le déclenchement d'une action plus complexe (comme des fonctions macro, ouverture de menus ou sous-menus, etc.).

A titre d'exemple, pour la prise de photographie à distance par la caméra d'un appareil mobile muni d'une application vidéo dédiée, l'ordre peut consister à envoyer un signal d'identification de la montre à l'appareil et l'action peut consister à déclencher la prise d'une photographie ou vidéo. La commande peut donc être envoyée par le sujet lui-même par actionnement du module de communication sur sa montre. L'application du terminal de communication est donc ainsi programmée pour recevoir un ordre de prise de vue photographie ou vidéo issu du signal émis par le module de communication.

La puce RFID est « passive » en ce sens que le module de communication ne possède pas sa propre source d'énergie tel qu'une pile ou un accumulateur pour fonctionner. Le module utilise ainsi le courant électrique induit par l'antenne lors de la production des signaux radiofréquences.

De préférence, les moyens d'activation de communication comprennent au moins une touche ou une surface de contact par effleurement sensible au contact humain. Ainsi, du fait de la mise en oeuvre des moyens d'activation par effleurement d'au moins une partie de la montre, il est possible de conserver les fonctionnalités mécaniques de la couronne ou du poussoir, qui réclament une pression plus importante de déclenchement sur leur surface d'appui. Ladite touche ou surface d'effleurement peut être positionnée sur la surface externe de la couronne ou du poussoir ou sur une autre surface de la montre comme le verre de la montre ou la carrure.

Selon un mode possible de réalisation, les moyens d'activation de communication comprennent une surface de contact par effleurement sensible au contact humain intégrant un capteur capacitif. De préférence, le capteur capacitif est disposé sur la couronne ou sur un poussoir, comme par exemple, situé sur la face frontale ou sur un côté de la couronne de la montre.

Selon un mode possible, les moyens d'activation de communication comprennent au moins une surface de contact par effleurement formant ou comprenant au moins une électrode localisée physiquement sur la couronne ou le poussoir et couplée électriquement à la fois à l'antenne et à la puce RFID pour établir par un contact humain contre celle-ci, la fermeture du circuit électrique entre l'antenne et la puce RFID.

Selon un aspect général avantageux de l'invention, le récepteur RFID et le second module de communication font partie d'un même appareil intermédiaire de communication.

Selon un mode de l'invention, l'appareil intermédiaire de communication est configuré pour réceptionner le signal d'entrée en provenance du module de communication de la montre sur une bande de fréquence de standard RFID, de préférence 25 kHz ou UHF par exemple 868 MHz, et pour transformer le signal d'entrée et émettre un signal de sortie par le second module de communication dans une bande de fréquence d'un autre standard de communication à plus longue portée, de préférence de type UHF, pour communiquer avec le terminal de communication. De préférence, l'émission du signal de sortie se fait dans une plage de fréquences comprises entre 2 400 MHz et 2 500 MHz selon le standard Bluetooth ou Bluetooth Low Energy.

L'avantage est ainsi de pouvoir commander le terminal à une plus grande distance de la montre que la distance déterminée par la fréquence du standard RFID qui généralement ne dépasse pas 1 mètre. On peut ainsi augmenter la distance jusqu'à 10-15 mètres environ.

Selon un autre mode de réalisation, le récepteur RFID et le second module de communication font partie d'un même appareil intermédiaire de communication comprenant une connexion filaire ou par broche, telle que du type USB, connectable audit terminal de communication pour transmettre des données audit terminal de communication en réponse à la transmission entre le module de communication de la montre et le récepteur RFID. Dans ce cas, la portée de la communication est limitée à la portée de communication selon le standard RFID soit environ 1 mètre à laquelle s'ajoute éventuellement la longueur de la liaison filaire entre l'appareil intermédiaire de communication et le terminal de communication.

Selon un autre mode possible, le récepteur RFID et le second module de communication font partie d'un même appareil intermédiaire de communication sans fil alimenté par une batterie et comprend ledit second module de communication configuré pour émettre un signal de sortie en champ proche (NFC ou « Near Field Communication ») avec le terminal de communication. Dans ce cas, la portée entre l'antenne et l'appareil intermédiaire de communication est limitée à quelques centimètres seulement. Ainsi, de préférence l'appareil intermédiaire de communication peut être associé ou intégré à un support pour le terminal de communication. Par exemple, le support physique peut être un accessoire de protection physique telle qu'une coque pour terminal mobile du type téléphone ou tablette.

L'antenne du module de communication peut être localisé à n'importe quel endroit de la montre permettant la transmission du signal radio vers le terminal et/ou l'appareil intermédiaire de communication. L'antenne peut être formée d'un simple enroulement ou bobine ou de plusieurs enroulements ou bobines. L'antenne peut aussi être réalisée par dépôt conducteur, comme des encres électriquement conductrices imprimées ou déposé par vaporisation sur un support non-conducteur du module, par exemple sur une surface non-conductrice de la couronne. Une telle disposition permet de réaliser une antenne de plus faible épaisseur que l'enroulement. Selon un aspect avantageux de l'invention, l'antenne est positionnée sur ou dans un bloc transparent aux ondes radios, de préférence fait en plastique et solidaire de la couronne ou du poussoir. Par exemple, l'antenne est réalisée dans une masse située à l'extrémité libre de la couronne ou autour de celle-ci. De préférence, le bloc a une forme sensiblement cylindrique prolongeant l'extrémité libre de la couronne ou une forme tubulaire entourant la couronne. Selon un aspect possible de réalisation de l'antenne, l'antenne peut avoir une forme en 3 dimensions telle qu'une forme sensiblement hélicoïdale logée dans une cavité de la tête de la couronne ou du poussoir ayant une surface de forme complémentaire hélicoïdale. Selon la complexité de la réalisation de la forme 3D de la surface de support pour l'antenne, la tête de la couronne peut être réalisée par une méthode d'impression 3D par exemple. La puce RFID comprend un circuit imprimé (IC) comprenant au moins une mémoire d'ordinateur ainsi que des circuits configurés pour moduler et démoduler le signal radiofréquence. La puce RFID peut être disposée à l'intérieur de la couronne, par exemple, dans la tête ou dans une tige de la couronne. Elle peut aussi être associée à l'antenne dans un bloc plastique comme mentionné avant. La puce RFID peut intégrer l'antenne comme sous forme d'une étiquette autoadhésive qui peut être collée ou incorporée sur ou dans la couronne.

### BRÈVE DESCRIPTION DES FIGURES

D'autres caractéristiques et avantages de l'invention ressortiront à la lecture de la description qui suit, en référence aux figures annexées, qui illustrent :
- La figure 1 est une vue schématique d'un premier mode de dispositif de communication selon l'invention comprenant un appareil intermédiaire de communication sans fil du type RFID-Bluetooth;
- La figure 2 est une illustration schématique du circuit du module de communication dans la couronne de montre ;
- La figure 3 est une vue schématique d'un second mode de dispositif de communication selon l'invention comprenant un appareil intermédiaire de communication mixte RFID-filaire;
- La figure 4 est une vue schématique d'un troisième mode de dispositif de communication selon l'invention comprenant un appareil intermédiaire de communication sans fil à faible portée (RFID-NFC)
- La figure 5 montre une illustration schématique d'un arrangement physique possible du module de communication dans un premier exemple de couronne de montre ;
- La figure 6 montre une illustration schématique d'un autre arrangement du module de communication dans un second exemple de couronne de montre ;
- La figure 7 est un ordinogramme du fonctionnement du dispositif selon l'invention.

### DESCRIPTION DÉTAILLÉE DE MODES DE RÉALISATION

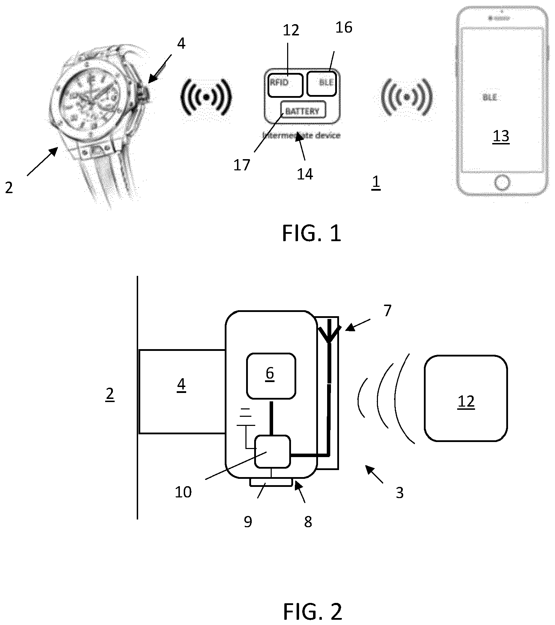

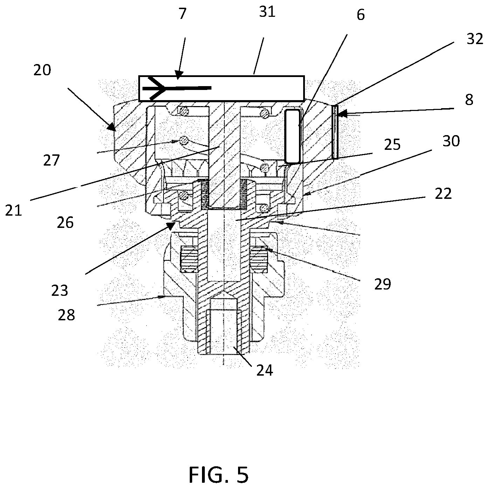

Un premier mode de réalisation du dispositif selon l'invention est illustré aux figures 1 et 2 à titre d'exemple. Le dispositif de communication 1 comprend une montre 2 munie d'un module de communication 3 sans fil du type RFID (« Radio Frequency Identification »). Le module peut être logé dans la couronne 4 de la montre dont un exemple mécanique détaillé est illustré à la figure 5. Le module de communication comprend une puce RFID 6 et au moins une antenne 7 reliée à la puce RFID. Des moyens d'activation 8 du module sont prévus pour activer la communication du module sur demande.

Selon l'exemple de la figure 2, ces moyens d'activation peuvent être des moyens par contact comprenant au moins une touche 9 laquelle peut être une électrode couplée à un interrupteur 10 reliant électriquement la puce RFID 6 à l'antenne 7. Ainsi la puce RFID étant passive, la source d'énergie ne provient que de l'antenne. Plus particulièrement, le courant induit par l'antenne 7 excitée par un récepteur RFID 12 distant lors de la réception d'un signal, n'alimente la puce RFID 6 que lorsque l'interrupteur ferme le circuit électrique au moyen du contact humain sur l'électrode. Aussi, la puce RFID n'est opérationnelle et en communication de données avec le récepteur RFID 12 que quand ce contact est établi. Ces moyens d'activation peuvent être remplacés un commutateur capacitif à effleurement muni d'un capteur placé à la surface de la couronne. Ces moyens peuvent aussi être remplacés par un commutateur électromécanique à deux positions (ouverture/fermeture).

Dans l'exemple de la figure 1, le récepteur RFID 12 peut faire partie d'un appareil intermédiaire de communication 14 comprenant une alimentation électrique telle qu'une batterie ou accumulateur pour l'alimentation électrique du récepteur RFID. L'appareil intermédiaire de communication 14 comprend d'autre part un émetteur sans fil de faible portée 16 permettant de générer un signal de sortie avec un terminal de communication 13 selon un autre standard de communication non-RFID. L'appareil intermédiaire de communication 14 comprend par ailleurs des moyens de conversion du signal d'entrée reçu par le récepteur RFID 12 en signal de sortie émis par l'émetteur sans fil de faible portée 16 compatible avec le module de communication du terminal. L'appareil intermédiaire de communication 14 peut ainsi être disposé à portée de la montre d'une part et du terminal d'autre part. Les portées sont définies en fonction des standards de communication choisis. L'appareil intermédiaire de communication 14 peut comprendre une source d'énergie autonome telle qu'une batterie rechargeable ou non ou être relié au secteur par un transformateur. Par exemple, l'appareil intermédiaire de communication 14 est configuré pour transformer le signal RFID, généralement de 125 kHz ou 868 MHz, en un signal de standard adapté à la communication avec le terminal de communication 13 par exemple Bluetooth de 2400 MHz.

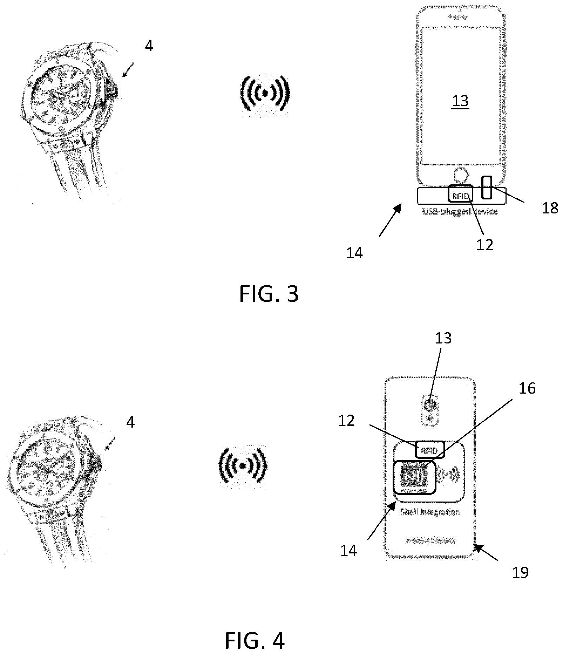

Selon le mode de la figure 3, l'appareil intermédiaire de communication 14 peut recevoir les signaux RFID du module de communication de la couronne par le récepteur RFID 12 et transmettre le signal ou un signal dérivé du signal reçu via une connexion filaire directement au terminal de communication 13. Préférablement, la communication se fait par une connexion filaire 18 du type USB sur chaque appareil ou tout autre standard filaire approprié connectable au terminal de communication 13.

Selon le mode de la figure 4, l'appareil intermédiaire de communication 14 comprend un récepteur RFID 12 pour la réception du signal en provenance du module de la montre et un émetteur sans fil de faible portée 16 pour l'émission du signal de sortie en direction du terminal 13. L'émetteur de faible portée peut être un module NFC de fréquence de 13,56 MHz. L'appareil intermédiaire de communication peut être supporté par une interface 19 en contact avec le terminal comme un accessoire de protection du terminal telle qu'une coque de protection par exemple.

Dans une application possible de l'invention, le module de communication 3 est configuré pour servir de commande à distance pour un dispositif électronique d'identification afin de procéder par exemple à une identification sans login au moyen du dispositif d'authentification lors de la connexion du terminal à un service internet. Un dispositif électronique d'identification peut être relié au terminal lors de l'authentification. Il peut être formé d'une clé USB ou NFC selon le protocole d'identification U2F, par exemple FIDO2, ou similaire. Dans ce cas, le bouton d'identification habituellement placé sur le dispositif peut être remplacé par les moyens d'activation 8 du module de communication de la montre. Le dispositif d'authentification comprend alors un récepteur RFID permettant de recevoir le signal RFID émis par le module de communication de la montre.

Le terminal de communication 13 peut être tout terminal de traitement de données et de commande du type électronique comme un terminal mobile ou fixe : par exemple, un téléphone portable, une tablette électronique, un ordinateur portable ou fixe, une installation domotique, une clé électronique d'un véhicule, une alarme, etc. Généralement, le terminal comprend une unité de traitement de donnée ou unité centrale ou processeur, des mémoires (mémoire vive, morte, tampon, etc.), des programmes dont un système d'exploitation (Android, Windows, MacOs, GNU/Linux, etc.) ainsi qu'un module de communication à faible portée apte à recevoir les communications de la part de l'appareil intermédiaire de communication 14. Le module du terminal peut être un module du type Bluetooth ou autre module radiofréquence. De manière additionnelle, le terminal peut comprendre un module internet filaire et/ou sans fil tel que LAN (WLAN), Wifi, DLNA, WiBro, WiMAX, HSPDA, HSUPA, LTE, LTE-A et autres.

Il faut aussi noter que le récepteur RFID 12 pourrait être intégré dans le terminal de communication 13 lui-même.

La figure 5 représente un exemple d'intégration possible du module de communication 3 dans une couronne 4 de montre.

Un exemple de cinématique de couronne est décrite dans la demande de brevet CH711114A2 pour plus de détail. En résumé, la couronne peut comprendre une tête 20 creuse comprenant un logement interne et une tige axiale 21 coulissant dans un alésage supérieur axial 22 d'un piston 23. Le piston 23 de couronne comprend un corps cylindrique présentant dans sa partie basse un alésage inférieur 24 qui peut être fileté destiné à sa liaison coaxiale avec une tige de remontoir de la montre (non représentée). Le haut du corps du piston est entouré d'une tête présentant un profil transversal de roue dentée extérieurement 25. Une bague de guidage 26 de guidage est agencée dans l'alésage axial du piston 23 et ajustée au diamètre de la tige centrale 21 de la tête de la couronne. La couronne peut comprend un ressort de renvoi 27 disposé entre la tête du piston de couronne et la tête de la couronne ; lequel ressort est destiné à pousser la tête de la couronne à distance du piston de la couronne. Un tube 28 de couronne est prévu pour fixer la couronne dans un alésage de boitier/bande de carrure de la montre. Ainsi le piston 23 peut coulisser axialement dans l'alésage du tube 28 de couronne. Le tube 28 de couronne peut comprendre dans sa partie supérieure une portion élargie dans laquelle sont pratiquées des encoches agencées selon une rampe périphérique. Un joint 29 agencé dans l'alésage axial du tube 28 améliore le guidage du coulissement du piston 23. Une bague 30 de verrouillage peut être prévue qui est logée à l'intérieur de la tête de couronne et solidaire de celle-ci. La bague comprend des moyens de verrouillage, comme des ergots, conformés pour interagir avec le tube 28 dans la position rétractée de la couronne de remontoir, pour bloquer en rotation et translation la tête de couronne par rapport au tube de couronne et par conséquent par rapport à une carrure de montre lorsque le tube 28 y est fixé. Des seconds moyens de verrouillage, comme des dents, conformés pour interagir avec le piston de couronne sont aussi prévus pour interagir avec le piston de la couronne dans la position fonctionnelle pour accoupler en rotation le piston et la tête de couronne.

Ainsi, la couronne peut être actionnée mécaniquement pour être escamotée dans la carrure de montre lorsqu'elle n'est pas utilisée et peut être sortie de son logement en vue de son utilisation pour des fonctions telles que le réglage ou remontage. Bien sur d'autres types de couronne de conception plus simple sans fonction d'escamotage sont possibles.

Selon l'invention, le module de communication peut comprendre un bloc 31 contenant au moins une antenne 7 lequel est fixé sur la tête 20 de la couronne comme par collage ou soudage. Le bloc peut être fabriqué en matière transparente aux ondes comme en matière plastique dure. La puce RFID 6 peut être intégrée ou non au bloc. Dans l'exemple illustré, la puce RFID 6 est contenue dans le logement interne de la tête comme par exemple collée sur la paroi interne dudit logement. Les moyens d'activation 8 de communication, tels qu'un capteur capacitif, peuvent être appliqués sur toute partie de la surface de la tête de la couronne comme par exemple sur un côté 32 de celle-ci. L'avantage du positionnement sur le côté dans la couronne illustrée à type d'exemple peut être que la commande des moyens d'activation par contact d'un doigt peut être réalisée après déploiement mécanique de la tête selon le mécanisme précédemment décrit.

Bien entendu, le capteur ou électrode de commande des moyens d'activation pourrait être positionné sur la partie frontale de la tête comme sur la partie externe du bloc 31.

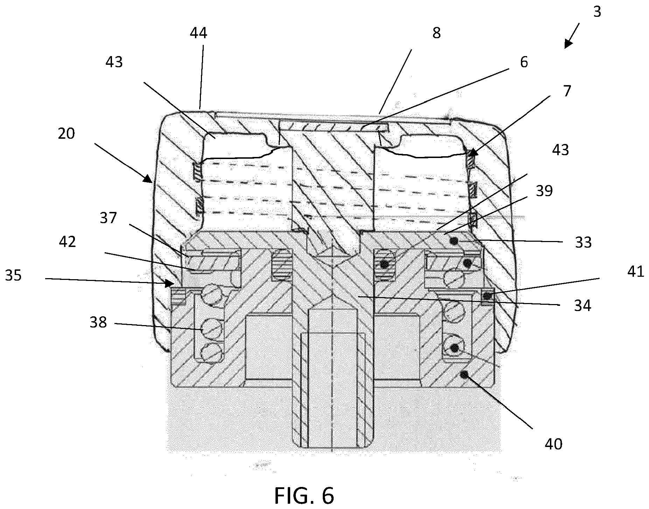

La figure 6 montre un second exemple possible d'une couronne de remontoir du type à limitateur de couple sur la laquelle est intégré un module de communication 3 selon l'invention. Le principe de fonctionnement mécanique de la couronne est décrit dans la demande de brevet suisse 0742/15 intitulée « couronne de remontoir à limitation de couple ».

Le principe mécanique fonctionnel de la couronne est le suivant. La couronne comprend une tête 20 destinée à être accouplée en déplacement axial et en rotation à une tige de remontoir d'un mouvement de montre par l'intermédiaire d'un canon 33 logé dans la couronne. La tête de couronne loge un insert 40. L'insert comprend une base dont le diamètre est sensiblement égal au diamètre de l'alésage de la tête de couronne et une tête d'insert dont les dimensions transversales sont plus faibles. La base de l'insert 40 est solidaire en rotation de la tête de couronne, dans laquelle elle est chassée. Un joint plat d'étanchéité 41 est intercalé entre les deux. Le canon 33 comprend un cylindre de liaison 34, coaxial et solidaire en rotation avec la tige de remontoir (non représentée). Le cylindre creux 34 du canon 33 est engagé dans l'alésage de plus petit diamètre de l'insert 40, un joint o-ring 43 étant intercalé entre les deux. La couronne du remontoir comprend des moyens de limitation de couple 35 interposés entre la tête de couronne et la tige de remontoir. Les moyens de limitation du couple comprennent un module élastiquement déformable dans la direction axiale de la couronne de remontoir constitué d'une rondelle d'indexation 37 et d'un ressort de rappel 38. Le ressort est monté dans un insert 40. La rondelle d'indexation 37 est engagée sur la tête de l'insert 40. Ainsi la rondelle d'indexation 37 est bloquée en rotation sur la tête de l'insert 40 mais peut glisser sur celle-ci en translation. Elle est repoussée par le ressort de rappel 38 contre un disque 39 du canon coaxial au cylindre de liaison 34 et présentant une surface de contact munie d'encoches sur la circonférence du disque. La rondelle d'indexation 37 comprend aussi des lames radiales dont l'espacement angulaire entre est adapté à l'amplitude angulaire des encoches de la portion périphérique du disque. Les lames radiales viennent en butée contre le disque 39 du canon et exercent une force pressante dans le sens axial de la couronne contre le profil de contact 42 de la portion périphérique du disque. Lorsqu'un couple de rotation est appliqué par l'utilisateur sur la tête 20 de couronne, celui-ci est transmis à l'insert 40 et transmis à la rondelle d'indexation 37. Il rencontre alors un couple de résistance du canon transmis à celui-ci par la tige du remontoir. Tant que ce dernier couple est faible, la rondelle d'indexation 37 entraîne le canon en rotation. Lorsque ce couple dépasse une valeur limite qui peut être choisie et ajustée par le constructeur de la couronne de remontoir et/ou de la montre, la rondelle d'indexation 37 glisse sur le profil périphérique du canon 33 qui n'est momentanément plus entraîné.

Le module de communication 3 comprend une antenne 7 de forme en 3 dimensions qui peut être par exemple de forme hélicoïdale ou en colimaçon de façon à augmenter la surface de l'antenne pour la réception du signal radiofréquence énergisant et la transmission d'énergie à la puce RFID. L'antenne peut être appliquée sur la surface interne de l'alésage 43 de la tête de la couronne soit directement soit sur un substrat intermédiaire appliqué sur la tête. Sur la face frontale 44 de la tête sont placés les moyens d'activation 8 comme par exemple une surface à effleurement sensible au contact humain intégrant un capteur capacitif ou une électrode selon l'arrangement de la figure 2. La puce RFID 6 peut être logée dans la tête comme dans une cavité de la face frontale ou dans l'alésage 43. L'antenne 7 et la puce RFID 6 peuvent être reliées par une liaison filaire ou sans fil. La structure électronique de la puce RFID en tant que telle est connue en soi.

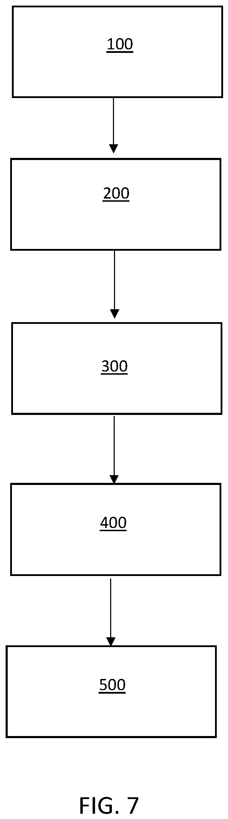

Le principe général de communication par le dispositif peut être décrit en relation avec la figure 7. Selon une première étape 100, la montre munie d'une couronne connectée, telle que décrite à titre d'exemple avant, est disposée par son utilisateur à portée radiofréquence du standard RFID du récepteur d'un appareil intermédiaire de communication ou alternativement à portée d'un terminal de communication lorsque celui-ci possède un module de communication RFID intégré. Lorsque la distance entre le module de la montre et le récepteur RFID est appropriée (par exemple entre 50 cm et 3 m), les moyens d'activation sont activés par contact humain pour l'envoi du signal et ainsi des données de la puce RFID 6 vers le récepteur RFID. Un signal contenant par exemple un identifiant est ainsi transmis au récepteur RFID dans l'étape 200. Ce signal est ensuite transformé dans une étape 300 en un signal de sortie pour être communiqué de manière compatible et compréhensible à l'unité centrale du terminal de communication. Optionnellement, l'unité centrale peut réaliser une étape de validation 400 consistant à comparer l'identifiant à une liste d'identifiant. Cette vérification peut être faite localement ou au moyen d'une base de donnée distante via internet. Enfin dans une étape suivante 500, la ou les données reçue(s) est/sont convertie(s) en action ou commande sur le terminal ou du terminal vers un appareil via une liaison sans fil comme un appareil domotique ou autre.

## Revendications

1. Dispositif de communication (1) à distance entre une montre (2) et un terminal de communication (13) d'un utilisateur, comprenant une montre (2) munie d'un module de communication sans fil (3) comprenant une puce RFID (6), de préférence passive, et une antenne de communication (7) associée à ladite puce RFID (6),
**caractérisé en ce que** le module de communication (3) est logé dans une couronne ou un poussoir mécanique (4) de ladite montre et **en ce que** le module de communication (3) comprend des moyens d'activation de communication (8) configurés pour mettre en relation le module de communication (3) avec un récepteur RFID (12) ; lesdits moyens d'activation de communication étant mis en oeuvre par contact humain sur une surface (9) desdits moyens d'activation de communication et **en ce qu'**en réponse à la mise en oeuvre des moyens d'activation de communication, le module de communication (3) est configuré pour transmettre au récepteur RFID (12) un signal lequel génère la transmission, par un second module de communication, d'au moins une information sous forme d'un ordre ou une commande au terminal de communication (13).

2. Dispositif de communication (1) selon la revendication 1, **caractérisé en ce que** les moyens d'activation de communication (8) comprennent au moins une touche ou une surface de contact par effleurement (9) sensible au contact humain.

3. Dispositif de communication (1) selon la revendication 2, **caractérisé en ce que** les moyens d'activation de communication (8) comprennent une surface à effleurement sensible au contact humain intégrant un capteur capacitif.

4. Dispositif de communication (1) selon la revendication 3, **caractérisé en ce que** le capteur capacitif est disposé sur la couronne (4).

5. Dispositif de communication (1) selon la revendication 4, **caractérisé en ce que** les moyens d'activation de communication (8) comprennent au moins une surface de contact par effleurement formant ou comprenant au moins une électrode (9) localisée physiquement sur la couronne ou le poussoir (4) et couplée électriquement à la fois à l'antenne (7) et à la puce RFID (6) pour établir par un contact humain contre celle-ci, la fermeture du circuit électrique entre l'antenne (7) et la puce RFID (6).

6. Dispositif de communication (1) selon l'une quelconque des revendications précédentes, **caractérisé en ce que** l'antenne (7) est positionnée sur ou dans un bloc (31) transparent aux ondes radios, de préférence fait en plastique et solidaire de la couronne ou du poussoir (4).

7. Dispositif de communication (1) selon l'une quelconque des revendications 2 à 6, **caractérisé en ce que** la mémoire contient des données d'information de configuration pour le terminal de communication (13).

8. Système comportant :
- un terminal de communication (13) d'un utilisateur,
- une montre (2) munie d'un module de communication sans fil (3) comprenant une puce RFID (6), de préférence passive, et une antenne de communication (7) associée à ladite puce RFID (6),
- un dispositif de communication (1) à distance selon l'une quelconque des revendications 1 à 7,
- un récepteur RFID (12),
- un second module de communication.

9. Système selon la revendication 8, **caractérisé en ce que** la puce RFID (6) comprend une mémoire contenant au moins un identifiant lequel est communiqué au second module de communication pour valider ou initier un ordre ou une commande programmé dans ledit terminal de communication (13).

10. Système selon l'une des revendications 8 ou 9, **caractérisé en ce que** le récepteur RFID (12) et le second module de communication font partie d'un même appareil intermédiaire de communication (14).

11. Système selon la revendication 10, **caractérisé en ce que** l'appareil intermédiaire de communication (14) est configuré pour réceptionner le signal d'entrée en provenance du module de communication (7) de la montre sur une bande de fréquence de standard RFID par le récepteur RFID (12), pour le transformer et émettre un signal de sortie par le second module de communication dans une bande de fréquence d'un standard de communication à plus longue portée pour communiquer avec le terminal de communication (13).

12. Système selon la revendication 10, **caractérisé en ce que** le module de communication (3) de l'appareil intermédiaire de communication (14) comprend une connexion filaire ou par broche, telle que type USB, connectable audit terminal de communication (13) pour transmettre des données audit terminal de communication (13) en réponse à la transmission entre le module de communication (3) de la montre et le récepteur RFID (12).

13. Système selon la revendication 10, **caractérisé en ce que** l'appareil intermédiaire de communication (14) est alimenté par une batterie et comprend ledit second module de communication configuré pour émettre un signal de sortie en champ proche (NFC ou « Near Field Communication ») avec le terminal de communication (13).

## Patentansprüche

1. Fernkommunikationsvorrichtung (1) zwischen einer Uhr (2) und einem Kommunikationsendgerät (13) eines Benutzers, umfassend eine Uhr (2), die mit einem drahtlosen Kommunikationsmodul (3) ausgestattet ist, umfassend einen RFID-Chip (6), vorzugsweise passiv, und eine Kommunikationsantenne (7), die dem RFID-Chip (6) zugewiesen ist,
**dadurch gekennzeichnet, dass** das Kommunikationsmodul (3) in einer Krone oder einem mechanischen Druckknopf (4) der Uhr aufgenommen ist, und dadurch, dass das Kommunikationsmodul (3) Mittel zur Aktivierung einer Kommunikation (8) umfasst, die konfiguriert sind, um das Kommunikationsmodul (3) mit einem RFID-Empfänger (12) in Verbindung zu bringen; wobei die Mittel zur Aktivierung einer Kommunikation durch menschlichen Kontakt auf einer Fläche (9) der Mittel zur Aktivierung der Kommunikation angewendet werden, und dadurch, dass in Reaktion auf die Anwendung der Mittel zur Aktivierung der Kommunikation, das Kommunikationsmodul (3) konfiguriert ist, um an den RFID-Empfänger (12) ein Signal zu übermitteln, das die Übertragung durch ein zweites Kommunikationsmodul mindestens einer Information in Form einer Anordnung oder eines Befehls an das Kommunikationsendgerät (13) generiert.

2. Kommunikationsvorrichtung (1) nach Anspruch 1, **dadurch gekennzeichnet, dass** die Mittel zur Aktivierung einer Kommunikation (8) mindestens eine Taste oder eine Berührungskontaktfläche (9), die für den menschlichen Kontakt empfindlich ist, umfassen.

3. Kommunikationsvorrichtung (1) nach Anspruch 2, **dadurch gekennzeichnet, dass** die Mittel zur Aktivierung einer Kommunikation (8) eine Berührungsfläche, die für den menschlichen Kontakt empfindlich ist, umfassen, die einen kapazitiven Sensor einschließen.

4. Kommunikationsvorrichtung (1) nach Anspruch 3, **dadurch gekennzeichnet, dass** der kapazitive Sensor auf der Krone (4) angeordnet ist.

5. Kommunikationsvorrichtung (1) nach Anspruch 4, **dadurch gekennzeichnet, dass** die Mittel zur Aktivierung einer Kommunikation (8) mindestens eine Berührungskontaktfläche umfassen, die mindestens eine Elektrode (9) bildet oder umfasst, die sich physisch auf der Krone oder dem Druckknopf (4) befindet und elektrisch sowohl an die Antenne (7) als auch an den RFID-Chip (6) gekoppelt ist, um durch einen menschlichen Kontakt gegen denselben den elektrischen Kreislaufs zwischen der Antenne (7) und dem RFID-Chip (6) zu schließen.

6. Kommunikationsvorrichtung (1) nach einem der vorhergehenden Ansprüche, **dadurch gekennzeichnet, dass** die Antenne (7) auf oder in einem Block (31) positioniert ist, der für Radiowellen transparent ist, vorzugsweise aus Kunststoff hergestellt und fest mit der Krone oder dem Druckknopf (4) verbunden ist.

7. Kommunikationsvorrichtung (1) nach einem der Ansprüche 2 bis 6, **dadurch gekennzeichnet, dass** der Speicher Konfigurationsinformationsdaten für das Kommunikationsendgerät (13) enthält.

8. System, umfassend:
- ein Kommunikationsendgerät (13) eines Benutzers,
- eine Uhr (2), die mit einem drahtlosen Kommunikationsmodul (3) ausgestattet ist, umfassend einen RFID-Chip (6), vorzugsweise passiv, und eine Kommunikationsantenne (7), die dem RFID-Chip (6) zugewiesen ist.
- eine Fernkommunikationsvorrichtung (1) nach einem der Ansprüche 1 bis 7,
- einen RFID-Empfänger (12),
- ein zweites Kommunikationsmodul.

9. System nach Anspruch 8, **dadurch gekennzeichnet, dass** der RFID-Chip (6) einen Speicher umfasst, der mindestens einen Identifikator enthält, der mit dem zweiten Kommunikationsmodul in Kommunikation steht, um eine Anordnung oder einen Befehl zu validieren oder zu initiieren, der/die in dem Kommunikationsendgerät (13) programmiert ist.

10. System nach einem der Ansprüche 8 oder 9, **dadurch gekennzeichnet, dass** der RFID-Empfänger (12) und das zweite Kommunikationsmodul Teil eines gleichen Zwischen-Kommunikationsgeräts (14) sind.

11. System nach Anspruch 10, **dadurch gekennzeichnet, dass** das Zwischen-Kommunikationsgerät (14) konfiguriert ist, um das Eingangssignal, das vom Kommunikationsmodul (7) der Uhr stammt, auf einem Standard-RFID-Frequenzband durch den RFID-Empfänger (12) zu empfangen, um es umzuwandeln und ein Ausgangssignal durch das zweite Kommunikationsmodul auf einem Standard-Kommunikationsfrequenzband mit größerer Reichweite zu emittieren, um mit dem Kommunikationsendgerät (13) zu kommunizieren.

12. System nach Anspruch 10, **dadurch gekennzeichnet, dass** das Kommunikationsmodul (3) des Zwischen-Kommunikationsgeräts (14) eine Kabel- oder Stiftverbindung umfasst, wie z. B. vom Typ USB, die mit dem Kommunikationsendgerät (13) verbunden werden kann, um Daten an das Kommunikationsendgerät (13) in Reaktion auf die Übertragung zwischen dem Kommunikationsmodul (3) der Uhr und dem RFID-Empfänger (12) zu übertragen.

13. System nach Anspruch 10, **dadurch gekennzeichnet, dass** das Zwischen-Kommunikationsgerät (14) von einer Batterie versorgt wird und das zweite Kommunikationsmodul umfasst, das konfiguriert ist, um ein Ausgangssignal im Nahfeld (NFC oder "Near Field Communication") mit dem Kommunikationsendgerät (13) zu emittieren.

## Claims

1. A distance communication device (1) between a watch (2) and a communication terminal (13) of a user, comprising a watch (2) provided with a wireless communication module (3) comprising an RFID chip (6), preferably passive, and a communication antenna (7) associated with said RFID chip (6),
**characterized in that** the communication module (3) is housed in a crown or a mechanical push piece (4) of said watch and **in that** the communication module (3) comprises communication activation means (8) configured to connect the communication module (3) with an RFID receiver (12); said communication activation means being implemented by human contact on a surface (9) of said communication activation means and **in that** in response to the implementation of the communication activation means, the communication module (3) is configured to send the RFID receiver (12) a signal that generates the transmission, by a second communication module, of at least one information item in the form of an order or a command to the communication terminal (13).

2. The communication device (1) according to claim 1, **characterized in that** the communication activation means (8) comprise at least one key or a touch-sensitive surface (9) sensitive to human contact.

3. The communication device (1) according to claim 2, **characterized in that** the communication activation means (8) comprise a touch-sensitive surface sensitive to human contact incorporating a capacitive sensor.

4. The communication device (1) according to claim 3, **characterized in that** the capacitive sensor is arranged on the crown (4).

5. The communication device (1) according to claim 4, **characterized in that** the communication activation means (8) comprise at least one touch-sensitive surface forming or comprising at least one electrode (9) located physically on the crown or the push piece (4) and electrically coupled both to the antenna (7) and to the RFID chip (6) to establish, by human contact against the latter, the closing of the electrical circuit between the antenna (7) and the RFID chip (6).

6. The communication device (1) according to any one of the preceding claims, **characterized in that** the antenna (7) is positioned on or in a unit (31) transparent to radio waves, preferably made from plastic and secured to the crown or the push piece (4).

7. The communication device (1) according to any one of claims 2 to 6, **characterized in that** the memory contains configuration information data for the communication terminal (13).

8. A system, including:
- a communication terminal (13) of a user,
- a watch (2) provided with a wireless communication module (3) comprising an RFID chip (6), preferably passive, and a communication antenna (7) associated with said RFID chip (6),
- a distance communication device (1) according to any one of claims 1 to 7,
- an RFID receiver (12),
- a second communication module.

9. The system according to claim 8, **characterized in that** the RFID chip (6) comprises a memory containing at least one identifier that is communicated to the second communication module in order to validate or initiate an order or command programmed into said communication terminal (13).

10. The system according to one of claims 8 or 9, **characterized in that** the RFID receiver (12) and the second communication module are part of a same intermediate communication apparatus (14).

11. The system according to claim 10, **characterized in that** the intermediate communication apparatus (14) is configured to receive the input signal coming from the communication module (7) of the watch on a standard RFID frequency band by the RFID receiver (12), to transform it and to emit an output signal by the second communication module in a frequency band of a longer-range communication standard to communicate with the communication terminal (13).

12. The system according to claim 10, **characterized in that** the communication module (3) of the intermediate communication apparatus (14) comprises a wired connection or a pin connection, such as of the USB type, connectable to said communication terminal (13) in order to transmit data to said communication terminal (13) in response to the transmission between the communication module (3) of the watch and the RFID receiver (12).

13. The system according to claim 10, **characterized in that** the intermediate communication apparatus (14) is powered by a battery and comprises said second communication module configured to emit a near field communication (NFC) output signal with the communication terminal (13).
